# FASCICULE DE BREVET EUROPEEN

(11) **EP 1 922 506 B1**
(45) Date de publication et mention de la délivrance du brevet: **26.06.2013**
(21) Numéro de dépôt: 05796015.5
(22) Date de dépôt: 09.08.2005
(51) Int. Cl.: F16L 29/00, F16L 37/373

(54) **SYSTÈME DE DÉCONNEXION D'URGENCE**
NOTTRENNSYSTEM
EMERGENCY DISCONNECTION SYSTEM

(43) Date de publication de la demande: 21.05.2008
(73) Titulaire: FMC Technologies S.A., 89100 Sens (FR)
(72) Inventeur: LE DEVEHAT, Renaud, F-89260 Fleurigny (FR); LOYER, Anthony, FR-89100 Sens (FR)
(74) Mandataire: Kurtz, Laurent Charles Edmond
(86) Numéro de dépôt international: PCT/FR2005/002060
(87) Numéro de publication internationale: WO 2007/017559

(56) Documents cités:
- EP-A- 0 287 046
- GB-A- 2 162 270
- US-A- 4 515 182

## Description

La présente invention concerne les systèmes de déconnexion d'urgence pour systèmes de chargement, en particulier pour bras de chargement/déchargement, par exemple pour le transfert de gaz naturel liquéfié.

Plus précisément, l'invention concerne un système de déconnexion d'urgence de bras de chargement au moyen de deux vannes retenues accolées l'une à l'autre à l'aide d'un collier.

De tels systèmes de déconnexion sont parfaitement connus de l'état de la technique, et il en existe plusieurs variantes, décrites par exemple dans les documents EP 0 748 429 B1 et US 4 335 747.

Dans un tel système, la procédure de déconnexion se passe en deux étapes : dans un premier temps, on procède à la fermeture des vannes, et ensuite à l'ouverture du collier de retenue.

La fermeture des vannes et l'ouverture du collier sont déclenchées par un ou plusieurs actionneurs. Un actionneur est un ensemble mécanique destiné à manoeuvrer les mécanismes de fermeture des vannes et d'ouverture du collier. Ces actionneurs doivent avoir un dispositif pour éviter l'ouverture du collier avant que les vannes n'aient été totalement fermées, car cela pourrait avoir des conséquences graves (perte d'une partie du chargement, pollution etc.). Ce dispositif est appelé *"interlock'* dans le domaine technique de l'invention défini supra.

Un premier type de système de déconnexion d'urgence comporte un premier actionneur pour la fermeture des vannes et un second actionneur (généralement, un vérin hydraulique) pour l'ouverture du collier. L'ouverture du collier est autorisée par une butée hydraulique lorsque les vannes sont fermées. La sécurité de l'ouverture est donc gérée par un *"interlock"* hydraulique. Ce type *d'"interlock"* présente plusieurs inconvénients : grippage de la butée à cause de la corrosion actionnée par l'air marin, déréglage de la butée au cours de l'utilisation.

Si la butée hydraulique n'est pas opérationnelle à cause d'un de ces problèmes, l'ouverture du collier ne peut se produire et le système de déconnexion d'urgence devient alors inefficace, ce qui peut s'avérer dangereux.

La fermeture des vannes et l'ouverture du collier y sont par ailleurs commandées par deux électrovannes dissociées ce qui permet de fermer les vannes sans nécessairement ouvrir le collier, et de rouvrir les vannes le cas échéant.

Ce système permet donc d'effectuer une séquence de déconnexion en deux étapes commandées indépendamment : fermeture des vannes, puis ouverture du collier.

D'autres types de système de déconnexion comportent deux vérins séparés mais intégrés dans un même actionneur : un premier vérin pour la manoeuvre des vannes et un second pour l'ouverture du collier. Ces deux vérins font intégralement partie de l'actionneur. Ce type d'actionneur présente un *"interlock'* mécanique réalisé avec des cames par exemple. Il est donc impossible de manoeuvrer le vérin ouvrant le collier tant que les vannes ne sont pas complètement fermées. Comme dans le système précédent, la fermeture des vannes et l'ouverture du collier sont gérées par deux électrovannes dissociées, ce qui permet de suivre une séquence de déconnexion d'urgence en deux étapes commandées indépendamment.

Ce système présente des inconvénients critiques pour la déconnexion d'urgence, notamment le poids du système élevé, qui plus est, se trouvant à l'extrémité du bras de chargement. De plus, dans certains modes de réalisation, ce système présente l'inconvénient d'une relative lenteur d'actionnement des deux vérins séparés.

En outre, dans certains modes de réalisation, le second vérin opère "à *vide"* pendant l'opération de fermeture des vannes effectuée par le premier vérin.

Un troisième type de système consiste à fermer les vannes et ouvrir le collier immédiatement après la fermeture de ces dernières. Ce type de système comporte un actionneur à vérin unique. La cinématique du système est telle que ce vérin ferme dans un premier temps les vannes et à la fin de sa course, il permet d'ouvrir le collier. Par la cinématique de cet actionneur, il est impossible d'ouvrir le collier sans que les vannes soient complètement fermées. *L'"interlock"* est donc intégré dans la cinématique même de ce système. Mais, ce type d'actionneur ne permet pas la réouverture des vannes une fois que la procédure de déconnexion a été engagée, et dans ce cas, le collier sera obligatoirement ouvert, car il est impossible d'interrompre la course du vérin tant qu'elle n'est pas complete, notamment de par l'inertie et la construction de celui-ci. Ce type de système est décrit notamment dans le document GB 2 162 270 A.

Ici, la séquence de déconnexion est commandée par une seule électrovanne. Un système similaire est connu par le document EP 0287046 A, qui montre un système selon le préambule de la revendication 1.

Or, dans la pratique, un premier seuil d'alerte pour la déconnexion est déclenché. Ce premier seuil correspond à la fermeture des vannes. En cas de risque plus élevé, un second seuil d'alerte est atteint, et l'ouverture du collier est déclenchée. Si le second seuil n'est pas atteint, et que l'alerte est levée, les vannes sont rouvertes et la procédure de chargement reprend.

En outre, ce type de système est associé à un collier à deux secteurs. Un tirant reliant ces deux secteurs de collier est pivoté par l'action du vérin en fin de course, ce qui permet de libérer et d'ouvrir ces deux secteurs. Dès lors, les vannes ne sont plus assemblées mécaniquement et la déconnexion d'urgence est réalisée. Cependant, ce collier ne présente pas de dispositif pour casser la glace qui se serait formée autour du collier lors d'un chargement / déchargement de produits cryogéniques, tel que du gaz naturel liquéfié à -165° C environ, comme c'est le cas sur les colliers traditionnels à quatre secteurs à ouverture radiale. Cette glace qui se serait formée autour du collier peut empêcher les deux secteurs de s'ouvrir complètement malgré le pivotement du tirant reliant les deux secteurs sous l'action du vérin.

L'invention vise à pallier ces inconvénients.

A cet effet, l'invention propose un système de déconnexion d'urgence, notamment pour un bras de chargement de fluide, du genre ayant deux vannes accolées à l'aide d'un collier à ouverture commandée, un actionneur muni d'une tige unique, et une cinématique monoaxe telle qu'un déplacement de la tige sur une première portion de sa course ferme les deux vannes et sur le reste de sa course, ouvre le collier, l'actionneur comportant des moyens propres à assurer le déplacement de la tige sur ces deux portions de course et agissant coaxialement ou sensiblement coaxialement, caractérisé en ce que ces moyens sont commandés indépendamment sur chacune desdites portions pendant une procédure de déconnexion d'urgence.

Ce système permet de manoeuvrer simultanément les deux vannes, puis d'ouvrir le collier en deux étapes distinctes, commandées indépendamment, le tout par une seule tige. Un avantage de ce système réside aussi dans le fait qu'on peut manoeuvrer les vannes dans les deux sens, ouverture et fermeture, sans ouvrir le collier. Ainsi, ont peut rouvrir les vannes après fermeture, par exemple dans le cas d'un essai de fonctionnement ou d'un premier seuil d'alarme, sans avoir à poursuivre la procédure de déconnexion jusqu'à l'ouverture du collier. De plus, la présente invention permet une grande simplification du mécanisme, un gain en compacité et un gain de poids significatif, le poids des éléments situés à l'extrémité du bras étant critique dans ce type de systèmes de chargement.

De préférence, l'actionneur comporte deux vérins imbriqués l'un dans l'autre, et par conséquent deux courses dissociées. La première course correspond à la fermeture des vannes et la deuxième course à la commande de l'ouverture du collier. Ces deux courses sont contrôlées par deux électrovannes indépendantes. Il est ainsi possible de fermer les vannes sans ouvrir le collier.

Cet actionneur spécifique est donc un vérin à double effet qui permet de rouvrir les vannes, et qui est muni d'un second vérin assurant une course supplémentaire. Cet actionneur comporte ainsi trois orifices de commande :
- un orifice pour la fermeture des vannes,
- un orifice pour l'ouverture du collier, orifice qui est avantageusement celui de l'évidement de la tige de vérin qui permet de mettre en pression le second vérin,
- un troisième orifice pour rentrer entièrement la tige de vérin et rouvrir les vannes.

Ainsi, selon un autre aspect original en soi, l'invention a également pour objet un actionneur, notamment pour système de déconnexion d'urgence, comportant un premier cylindre, alimenté par deux orifices, entre lesquels est monté un piston creux servant de cylindre à un second piston duquel part une tige traversant lesdits premier et second cylindres pour déboucher hors de l'actionneur, la tige comportant une creusure traversante qui débouche derrière le second piston dans le second cylindre pour alimenter celui-ci.

La cinématique de ce système permet de manoeuvrer simultanément les deux vannes composant le système de déconnexion d'urgence, puis d'ouvrir le collier en deux étapes commandées indépendamment.

En pratique, les vannes pivotent à l'intérieur de conduits du système de déconnexion, autour de deux axes parallèles et coplanaires situés dans un plan médian du système de déconnexion. Chacun des deux axes de rotation des vannes est débouchant au moins à l'une de ses extrémités hors du conduit dont il commande la vanne. Les deux extrémités débouchantes des axes sont placées du même côté du système de connexion d'urgence et sont reliées, chacune à un levier de commande, deux biellettes reliant ces leviers de commande montés respectivement à l'extrémité débouchante de chacun des axes de commande des vannes. L'une des extrémités de l'un des leviers de commande est reliée à une extrémité de la tige de l'actionneur située dans le prolongement de la biellette de manoeuvre des vannes correspondantes. La translation de la tige de l'actionneur est transformée en rotation de l'axe d'une vanne par un système de transformation de mouvement via le levier de commande correspondant, qui transmet son mouvement de rotation par des biellettes au levier de commande de l'axe de la vanne opposée. Ainsi, il est possible de manoeuvrer simultanément les deux vannes à l'aide de la translation de la tige de l'actionneur. La plage de manoeuvre du mécanisme de fermeture des vannes correspond à la première plage de translation autorisée par l'actionneur décrit supra.

La liaison mécanique entre l'extrémité précitée de la tige de l'actionneur et le premier levier de commande de fermeture des vannes est conçue de manière à ce que lorsque l'actionneur a atteint l'extrémité de sa course correspondant à la fermeture des vannes, une translation supplémentaire entraîne une désolidarisation de l'extrémité de l'actionneur du levier de commande. Cette translation supplémentaire correspondant à la deuxième plage de manoeuvre autorisée par l'actionneur entraîne le contact de l'extrémité de la tige de l'actionneur avec un système de came et tirant de retenue de secteurs d'un collier, et autorise l'ouverture de celui-ci, provoquant ainsi la déconnexion des deux corps de vannes du système de déconnexion.

Le collier associé à ce système de déconnexion est, de préférence, un collier du type à deux secteurs emmagasinant, grâce à des moyens élastiques, de l'énergie lors de sa fermeture la restituant au moment de l'ouverture du collier de telle manière que les moyens élastiques provoquent l'ouverture du collier même si celui-ci est bloqué par la glace.

Préférentiellement, Les extrémités en regard des secteurs sont reliées deux à deux respectivement par deux tirants, l'un étant fixe, l'autre permettant l'ouverture du collier.

Ce dernier tirant présente avantageusement à chacune de ses extrémités des cames en liaison avec les extrémités correspondantes de chacun des secteurs, sous contrainte de moyens élastiques, tels que des rondelles élastiques ou des ressorts, qui équipent le collier. Ainsi, il est possible de prévoir qu'un un point mort doit être dépassé lors du pivotement du tirant sous l'action de la tige de l'actionneur. Le franchissement de ce point mort permet d'éviter toute déconnexion intempestive du système.

Ainsi, selon encore un autre aspect original en soi, pouvant avantageusement être combiné aux précédents, le collier est du genre à deux secteurs reliés entre eux par des tirants dont l'un autorise l'ouverture dudit collier et l'autre permet le pivotement d'un secteur par rapport à l'autre, et en ce que ledit collier comporte des moyens élastiques intervenant entre les secteurs et les corps des vannes pour assurer l'ouverture complète du collier.

En d'autres termes, ce collier d'accouplement pour accoupler deux éléments de transport de fluide comporte deux secteurs reliés entre eux à leurs extrémités en regard par deux tirants, l'un desdits tirants étant conçu de manière à libérer les extrémités correspondantes des secteurs pour ouvrir le collier et chacun des secteurs comportant des moyens élastiques, ici des empilements de rondelles élastiques, qui permettent d'emmagasiner une certaine quantité d'énergie élastique lors de la fermeture du collier, et de la restituer lors de la libération de deux des extrémités des secteurs pour garantir l'ouverture du collier en toutes circonstances.

Il convient enfin de relever que l'invention telle que définie supra satisfait aux dispositions normatives en vigueur en la matière (OCIMF pour *"Oil Company International Marine Forum"* et EN1474)

D'une manière plus générale, des caractéristiques préférées de l'invention sont les suivantes :
- les moyens sont propres à assurer une réversibilité de l'opération de fermeture des vannes avant l'ouverture du collier ;
- l'actionneur est du genre comportant deux vérins imbriqués l'un dans l'autre, et commandant la tige d'actionneur unique, la course du premier vérin correspondant à ladite première portion de course de la tige et la course du deuxième vérin à la portion de course restante, chacun des vérins étant commandé par une électrovanne indépendante ;
- le collier est du genre à deux secteurs reliés entre eux par des tirants dont l'un autorise l'ouverture dudit collier et l'autre permet le pivotement d'un secteur par rapport à l'autre, et en ce que ledit collier comporte des moyens élastiques intervenant entre les secteurs et les corps des vannes pour assurer l'ouverture complète du collier ;
- la première portion de course correspondant à la commande de la fermeture des vannes est au moins égale à celle correspondant à l'ouverture du collier de manière à ce que, même lorsque la commande d'actionnement de la seconde portion de cours est déclenchée avant la commande de la première portion de course, les vannes seront fermées avant l'ouverture du collier de par la cinématique mono axe dudit système ;
- les moyens élastiques se présentent sous la forme de rondelles élastiques disposées dans des puits prévus à cet effet sur les secteurs du collier, perpendiculairement à l'axe médian des deux corps de vannes ;
- le premier vérin est alimenté par deux orifices, entre lesquels est monté un piston creux servant de cylindre à un second piston formant le second vérin et duquel part la tige d'actionneur, qui traverse lesdits premier et second vérins pour déboucher hors de l'actionneur ;
- ladite tige comporte une creusure traversante qui débouche derrière le second piston dans le second vérin pour alimenter ce dernier ; et
- le tirant autorisant l'ouverture du collier est pourvu de cames à chacune de ses extrémités en liaison avec les extrémités correspondantes de chacun des secteurs l'une des cames étant conformée en index prenant appui sur l'extrémité du secteur correspondant, et en ce que ce tirant vient prendre appui dans la position fermée sur une butée ménagée à ladite extrémité dudit secteur du collier, celui-ci étant en outre sous contrainte des moyens élastiques qui l'équipent de sorte qu'un point mort doive être dépassé par l'index lors du pivotement du tirant sous l'action du vérin de l'actionneur pour ouvrir le collier.

D'autres caractéristiques et avantages de la présente invention ressortiront de la description qui suit, donnés à titre illustratif et non limitatif, en référence aux dessins annexés sur lesquels :
- la figure 1 est une vue schématique d'un système de déconnexion d'urgence selon l'invention équipant un bras de chargement/déchargement ;
- les figures 2A à 2C sont des vues de profil d'un système de déconnexion d'urgence selon l'invention, respectivement en position vannes ouvertes, vannes fermées et ouverture du collier ;
- les figures 3A à 3C sont des vues schématiques d'un actionneur spécifique au système de déconnexion d'urgence selon l'invention ;
- la figure 4 est une vue de dessus d'un collier de maintien pour système de déconnexion d'urgence selon l'invention.
- la figure 5 est une vue en coupe selon la ligne V-V de la figure 4, d'un poussoir selon l'invention, en position non contrainte.
- les figures 6A à 6C sont des vues schématiques d'un autre actionneur spécifique au système de déconnexion d'urgence selon l'invention.
- les figures 7A à 7C sont des vues schématiques d'un autre actionneur spécifique au système de déconnexion d'urgence selon l'invention.
- les figures 8A à 8C sont des vues schématiques d'un autre actionneur spécifique au système de déconnexion d'urgence selon l'invention.
- les figures 9A à 9C et 10A à 10C présentent respectivement deux variantes d'un autre actionneur spécifique au système de déconnexion selon l'invention.

Pour des raisons de clarté des figures, les différents éléments ne sont pas représentés sous une échelle homogène.

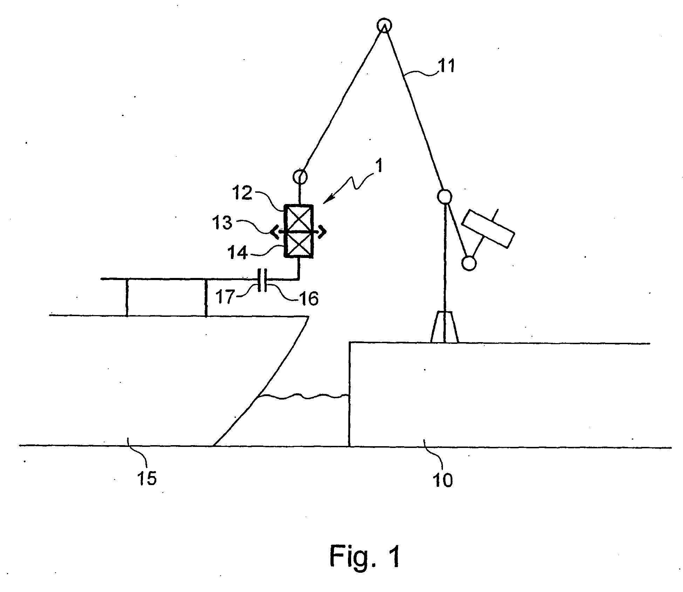

Comme visible schématiquement en figure 1, le système de déconnexion d'urgence 1 selon l'invention est monté à l'extrémité d'un bras 11 équilibré installé sur une jetée 13. Le système comporte deux corps 100 et 200 de vanne accolés et maintenus par un collier 300 dont l'ouverture permet la déconnexion d'urgence entre un navire 15 et la jetée 13. Il est monté sur le bras 11 en amont d'un coupleur hydraulique 14 destiné à être raccordé à un manifold 17 prévu sur le navire 15.

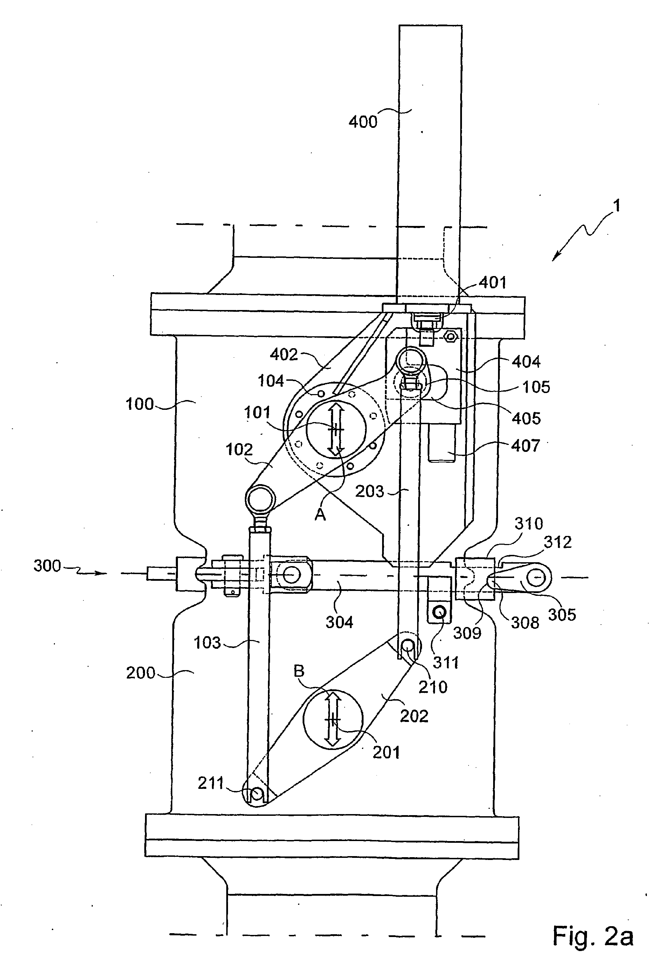

Un mode de réalisation préféré du système 1 de déconnexion d'urgence selon l'invention est visible plus en détail sur les figures 2A à 2C.

Ce système comporte deux corps de vanne 100, 200 reliés entre eux par un collier 300.

Les vannes, non visibles sur la figure 2A à 2C, sont respectivement montées à l'intérieur des corps 100 et 200 sur des axes 101 et 201, eux-mêmes montés en rotation par rapport aux corps 100 et 200. La position des vannes dans les corps 100 et 200 est symbolisée par les doubles flèches A et B.

Chacune des extrémités débouchantes des axes 101 et 201 est reliée à un levier de commande 102, 202 fixés sur lesdits axes, afin de manoeuvrer ies vannes.

Les extrémités du levier de commande supérieur 102 sont respectivement reliées par des biellettes parallèles 103, 203 aux extrémités du levier de commande inférieur 202 correspondant. Les biellettes sont chacune montées en liaison pivot avec le levier de commande supérieur 102 et ont chacune un seul degré de liberté par rapport à celui-ci.

Les extrémités opposées des biellettes 103 et 203 sont chacune pourvues d'un évidement en "U' inversé propre chacun à coopérer avec un des pions 210 et 211 disposés aux extrémités correspondantes du levier de commande inférieur 202. Ce montage confère aux biellettes au moins deux degrés de liberté par rapport au levier de commande inférieur 202 : la rotation et la translation dans un plan perpendiculaire à celui de la rotation. Ainsi, lors d'une déconnexion d'urgence, les biellettes 103 et 203, solidaires du corps de vanne supérieur 100, peuvent se désolidariser librement du corps 200 de vanne inférieur. Ce montage permet donc, de par sa conception à double biellette, d'ouvrir et de fermer les vannes avant la déconnexion du système, tout en assurant la sécurité de celles-ci.

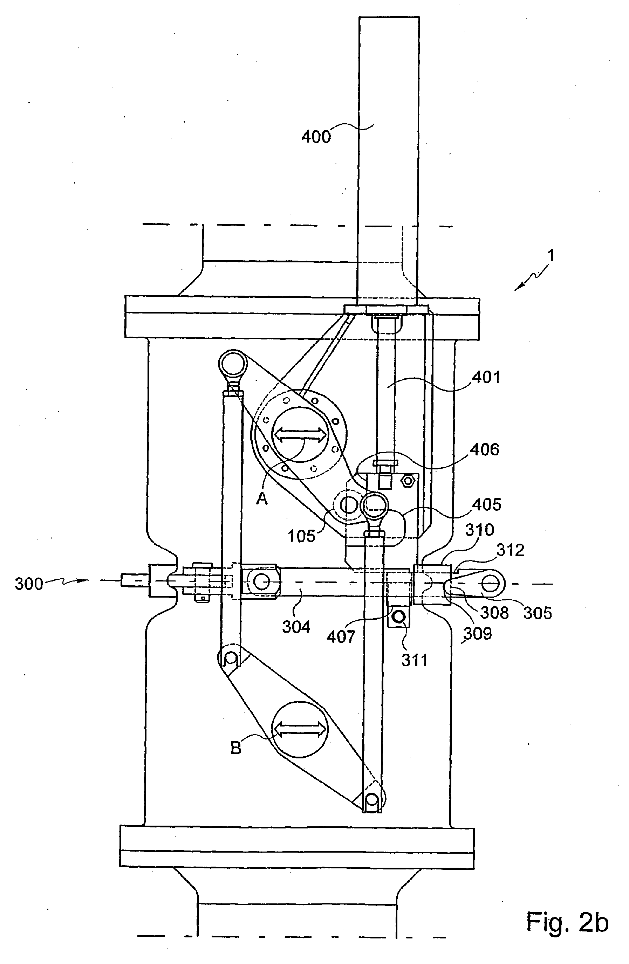

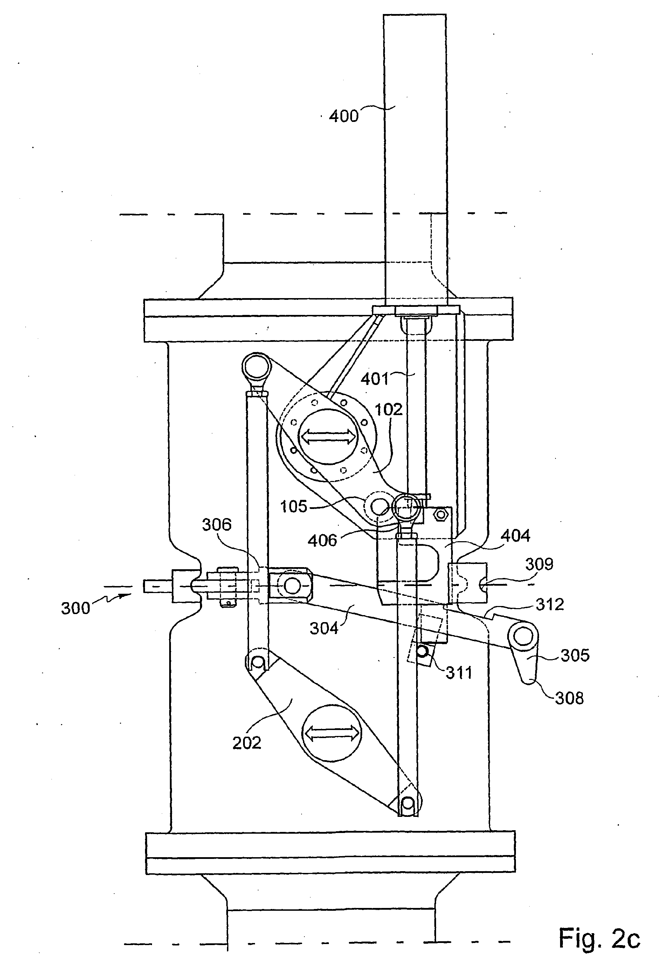

Le système de déconnexion selon l'invention comporte en outre un actionneur 400 comportant une tige de commande 401 et monté sur une plaque support 402 fixé au corps de vanne supérieur 100 par l'intermédiaire d'un support 104. La tige 401 est agencée parallèlement à la direction des deux biellettes 103 et 203. Une plaquette 404 est solidarisée à l'extrémité de la tige 401. Cette plaquette est pourvue d'une rainure 405 dans laquelle coulisse un galet 105 monté à l'une des extrémités du levier de commande supérieur 102. Ce système de galet 105 coulissant dans une rainure 405 permet de transformer le mouvement de translation de l'actionneur 400 en mouvement de rotation du levier de commande 102, permettant ainsi de fermer les vannes du système, comme visible en figure 2B. Lorsque la tige 401 de l'actionneur 400 a effectué une course suffisante pour amener les vannes dans la position fermée, représentée par les flèches A et B sur les figures 2B et 2C, un décrochement 406 prévu sur la plaquette 404 à l'extrémité supérieure débouchante de la rainure 405 permet de dégager le galet 105, ce qui permet à la tige 401 de poursuivre sa translation vers le bas, et d'arrêter la rotation des leviers de commande des vannes. Le décrochement 406 étant pratiqué uniquement dans la partie supérieure de la plaquette 404, une inversion du mouvement de translation de la tige 401 entraîne par l'intermédiaire de la plaquette 404, de la rainure 405 et du galet 105 une réouverture des vannes.

Comme visible en figure 2C, une poursuite de la translation de la tige 401 vers le bas après dégagement du galet 105, amène une saillie 407 agencée à l'extrémité inférieure de la plaquette 404 en contact avec un pion 311 du collier 300, grâce à quoi la poursuite de la translation provoque l'ouverture de celui-ci comme visible en figure 2C et la séparation des corps de vannes 100 et 200 permettant une déconnexion d'urgence du bras de chargement / déchargement 11 par l'intermédiaire du système 1.

L'une des caractéristiques de la présente invention réside dans le fait que l'actionneur 400 comporte un vérin de conception particulière permettant à la tige 401 de disposer de deux plages de translation distinctes et adjacentes, la translation de la tige 401 sur chacune d'entre elles étant commandée par une électrovanne séparée. De plus, chacune de ces deux plages de translation correspond respectivement dans une procédure de déconnexion d'urgence à la plage de fermeture des vannes allant jusqu'au dégagement du galet 105 de la rainure 405 et à la plage d'ouverture du collier qui suit le dégagement précité.

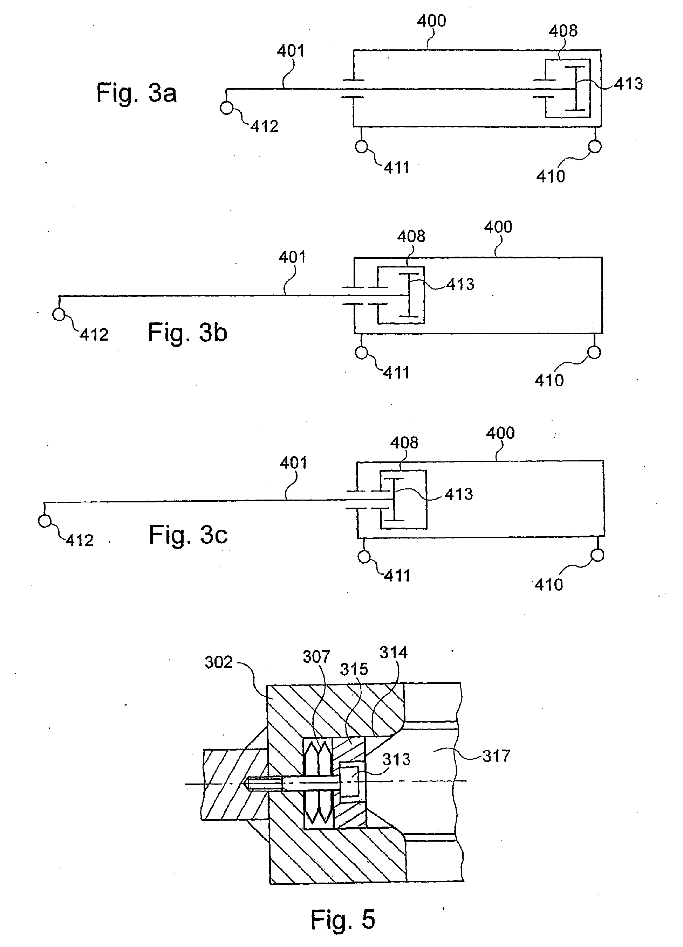

Les figures 3A à 3C représentent schématiquement un tel actionneur 400, sa tige 401 se trouvant respectivement dans les positions correspondant aux figures 2A à 2C.

Cet actionneur 400 comporte un premier piston 408 à l'intérieur duquel est disposé un second piston 413 relié à la tige 401 qui traverse le corps du premier piston 408 et de l'actionneur 400. Cet actionneur 400 est équipé de trois orifices de commande. Le premier orifice 410 est utilisé pour la fermeture des vannes. La mise sous pression hydraulique de cet orifice provoque le déplacement du piston 408 de sa position en figure 3A à sa position représentée en figure 3B, cette course correspondant dans la cinématique du mécanisme de déconnexion à la course nécessaire pour fermer les vannes, c'est-à-dire à la course de la tige 401 représentée entre les figures 2A et 2B. Le second orifice 411 sert à l'ouverture des vannes, la mise sous pression de celui-ci faisant revenir le piston 408 de sa position représentée en figure 3B à la position représentée en figure 3A, ces positions correspondant dans la cinématique du mécanisme à la fermeture des vannes (voir figure 2A et 2B).

Le troisième orifice 412 est utilisé pour l'alimentation du second piston 413 en utilisant un évidement (non représenté) ménagé à l'intérieur de la tige 401. La mise sous pression hydraulique de cet orifice 412 permet de faire passer le piston 413 de sa position représentée en figure 3B à sa position représentée en figure 3C, ce qui correspond dans la cinématique du système de déconnexion à la course permettant l'ouverture du collier 300 (voir figures 2B et 2C).

Chacune des entrées 410, 411 et 412 est commandée par une électrovanne séparée, ce qui permet de commander indépendamment le déplacement des pistons 408 et 413 et ainsi de commander indépendamment l'ouverture et la fermeture des vannes et l'ouverture du collier 300, et de présenter une séquence de déconnexion en deux étapes commandées indépendamment.

Le système de déconnexion selon l'invention présente ainsi un *"interlock"* mécanique intégré à sa cinématique, dans la mesure où celle-ci n'autorise pas une ouverture du collier 300 avant que les vannes ne soient complètement fermées.

La déconnexion est rendue possible par l'utilisation d'un collier 300 composé de deux secteurs 301 et 302, reliés deux à deux respectivement par deux tirants 303 et 304, l'un étant fixe (303), l'autre (304) permettant l'ouverture du collier.

Le premier tirant 303 dit fixe, est monté en liaison pivot par rapport à une des extrémités des secteurs 301 et 302, dans le plan formé par ces deux secteurs, leur permettant ainsi de pivoter l'un par rapport à l'autre dans ce même plan.

Le second tirant 304 dit à ouverture, permet l'ouverture d'urgence du collier 300. Il est pourvu à chacune de ses extrémités d'une came 305, 306, chacune montée à pivot sur celui-ci, dans un plan perpendiculaire au plan formé par les secteurs 301 et 302. L'une des cames, 306, est montée à pivot sur l'extrémité de secteur correspondante, dans le plan formé par les deux secteurs. L'autre came, 305, est conformée en index 308 dont l'extrémité vient prendre appui sur une creusure 309 ménagée du côté externe du secteur opposé au précédent.

Chaque secteur est équipé de préférence de moyens élastiques propres à stocker de l'énergie, intervenant entre le secteur et les corps de vanne de manière à écarter les secteurs en toutes circonstances, notamment lorsque de la glace se serait formée autour du collier 300 chargement / déchargement d'un produit cryogénique, notamment le gaz naturel liquéfié dont la température est de -165°C environ.

Ici, chaque secteur 301 et 302 comporte respectivement deux empilements de rondelles élastiques 307 disposés perpendiculairement à l'axe des corps de vannes sur lesdits secteurs et qui, lorsque le collier 300 est fermé, sont comprimés et permettent d'emmagasiner de l'énergie. Lorsque l'actionneur 400 fait pivoter le tirant 304, ces rondelles libèrent leur énergie instantanément, ce qui permet de casser la glace qui se serait formée autour du collier 300. Dans ce cas, la séparation mécanique des corps de vannes 100 et 200 n'est plus perturbée par la présence de glace et cette séparation peut alors se produire proprement et en toute sécurité. Ce dispositif permet que de l'énergie soit stockée dans le collier 300 afin de casser la glace lors de l'ouverture de celui-ci.

La figure 5 présente en détail, dans la position ouverte du collier, un empilement de rondelles élastiques 307, monté dans un puits 314 borgne ménagé au fond d'une creusure 317 du secteur, ici 302. Les rondelles 307 sont retenues au fond du puits 314 par un poussoir 315 lui-même retenu par une vis 313 implantée dans le corps du secteur 302. Le poussoir 315 possède ainsi un degré de liberté en translation par rapport au secteur 302. L'empilement des rondelles 307 élastiques et leur sens de montage permet de régler la quantité d'énergie élastique emmagasinée dans le collier 300 lors de sa fermeture. En position fermée, chaque poussoir 315 vient en appui contre les corps de vanne 100, 200, non représentés en figures, et permet de libérer l'énergie emmagasinée au moment de l'ouverture du collier 300, et entraîner l'écartement des secteurs 301 et 302.

Grâce aux cames 305 et 306 décrites supra, non représentées en figure 5, combinées avec les rondelles élastiques 307, l'extrémité de l'index 308 est plaquée dans la creusure 309 correspondante. Ainsi qu'on peut le voir sur les figures 2a et 2b, le tirant 304 a une position légèrement décalée par rapport à l'horizontale. Il en va de même pour la came 305. Ces positions décalées traduisent le fait que le collier 300 est sous contrainte, par l'action des rondelles élastiques 307. Ainsi, un point mort doit être dépassé lors du pivotement du tirant 304 sous l'action du vérin de l'actionneur 400. En effet, le pion 311 étant monté dans un palier 313 du tirant 304, ce dernier pivote lorsqu'il entre en contact avec la saillie 407 de la plaquette 404 montée en bout de la tige de l'actionneur 400. Le franchissement de ce point mort permet d'éviter toute déconnexion intempestive du système. Pour éviter que le tirant 304 ne bascule de l'autre coté, un évidement 312 est prévu sur celui-ci. Lorsque le collier est fermé, l'évidement 312 vient prendre appui sur une butée 310 prévue à l'extrémité correspondante du secteur 302, afin d'empêcher le tirant 304 de basculer dans le sens opposé au sens de l'ouverture. Cette butée 310 en coopération avec l'évidement 312 assurent son maintien en position, en léger décalage avec l'horizontale. Lors de l'ouverture du collier 300, le tirant pivote, ce qui entraîne la rotation de la came 305 autour de son axe. Lorsque le point dur a été franchi, le basculement de la came 305 en position verticale libère le collier.

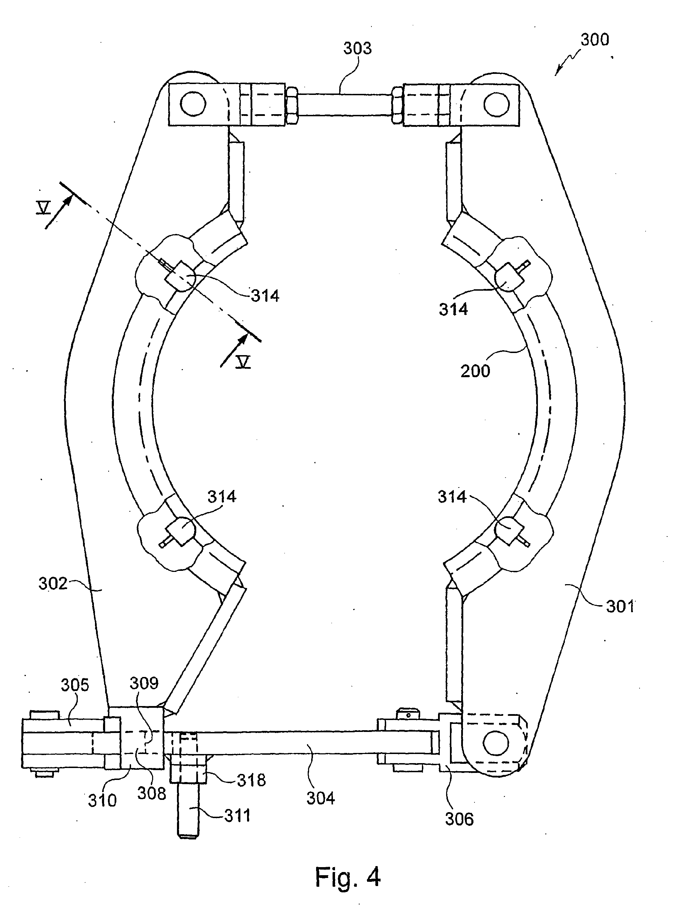

Dans la réalisation préférée représentée notamment en figure 4, on notera que le pion 311 est monté de manière amovible dans un palier 318 prévu à cet effet sur le tirant 304. En phase de tests, le retrait du pion 311 permet de vérifier le fonctionnement de l'actionneur 400 jusqu'en bout de course sans pour autant ouvrir le collier 300.

La présente réalisation préférée d'un système de déconnexion d'urgence selon l'invention permet d'une part une déconnexion en deux étapes commandées indépendamment : fermeture des vannes puis ouverture du collier, et, d'autre part, un stockage d'énergie dans le collier pour faciliter son ouverture dans le cas où de la glace se serait formée autour de celui-ci lors du transfert de produits cryogéniques.

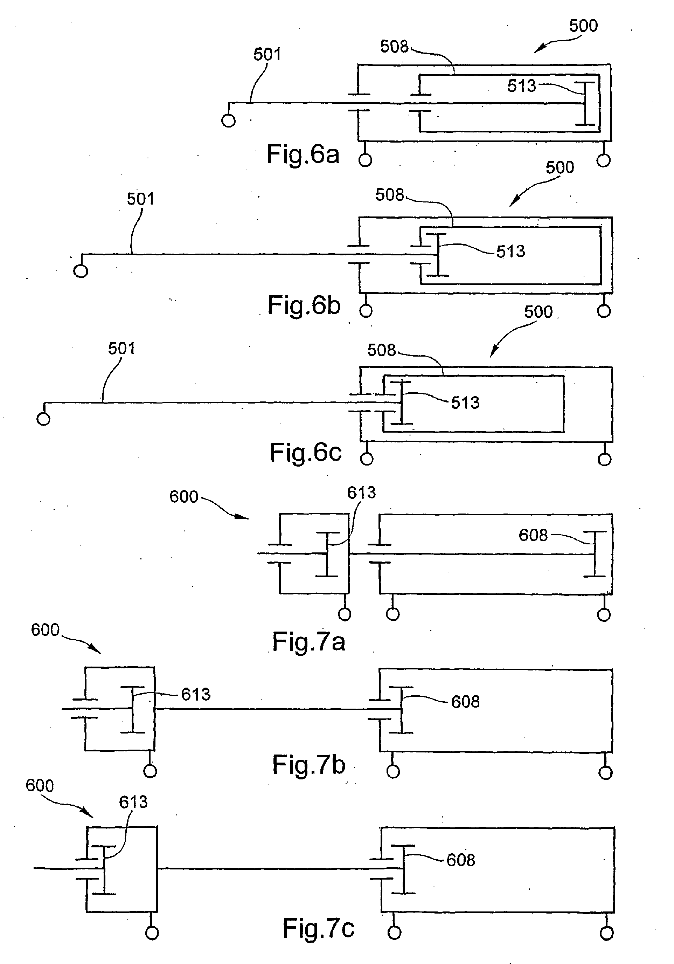

Dans une autre réalisation de l'invention, on pourrait envisager de remplacer l'actionneur décrit supra par un autre actionneur tel que visible en figure 6A à 6C.

Cet actionneur comporte un premier piston 508 à l'intérieur duquel est disposé un second piston 513, relié à la tige 501, qui traverse le corps du premier piston 508 et de l'actionneur 500.

Tout comme l'actionneur 400, cet actionneur 500 est équipé de trois orifices de commande, fonctionnant sur le même principe que l'actionneur 400, la différence principale entre les deux actionneurs étant que la course d'actionnement des vannes est assurée par le piston intérieur 513 et la course correspondant à l'ouverture du collier est assurée par le second piston 508, extérieur comme visible en figure 6C.

On pourrait également envisager l'utilisation d'un autre type d'actionneur tel que visible sur les figures 7A à 7C. Cet actionneur 600 comporte deux vérins 508 et 513 simples, montés l'un derrière l'autre. Le second vérin 613 assurant l'ouverture du collier est ici un vérin simple effet. L'utilisation de cet actionneur 600 permet d'utiliser des vérins standard du commerce.

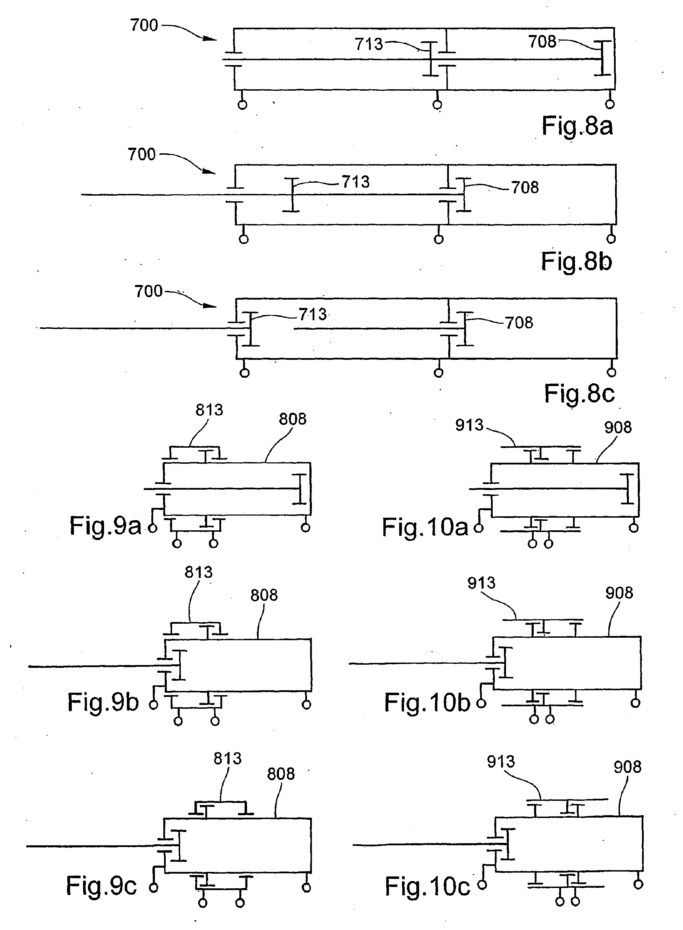

Une autre réalisation possible d'un actionneur spécifique à l'invention est illustrée en figure 8A à 8C. Cet actionneur 700 est de type « tandem » connu par ailleurs.

Cet actionneur 700 comporte en effet deux vérins mis en série comportant chacun un piston (708,713), le piston 708 assurant le déplacement de la tige de vérins jusqu'à la position de fermeture des vannes, et le piston 713 prenant le relais jusqu'à l'ouverture du collier comme visible en figure 8C. Ce type d'actionneur présente l'avantage d'une construction relativement simple, cependant, l'encombrement de cet actionneur est plus important que celui des actionneurs 400 et 500 décrits supra.

Deux autres variantes d'un actionneur spécifique au système de déconnexion selon l'invention sont visibles respectivement sur les figures 9A à 9C et 10A à 10C. Dans cet autre mode de réalisation, l'actionneur comporte 2 vérins, le premier vérin (808,908) de manoeuvre des vannes est un vérin annulaire monté de façon concentrique au second vérin (813,913) permettant l'ouverture du collier. Le vérin à course réduite (813,913) pour l'ouverture du collier peut être dans cette configuration un vérin à simple effet.

La présente invention ne se limite pas aux réalisations préférées décrites supra, mais englobe au contraire toutes les variantes d'exécution selon les revendications.

On pourrait notamment envisager de replacer les actionneurs décrits supra par tout ensemble de vérins, pouvant assurer les mêmes fonctions, ou un système à une ou plusieurs crémaillères assurant les mêmes fonctions que les présents actionneurs.

On pourrait également envisager de remplacer les rondelles élastiques décrites supra par d'autres moyens élastiques, par exemple des ressorts.

## Revendications

1. Système (1) de déconnexion d'urgence, notamment pour un bras de chargement de fluide, du genre ayant deux vannes accolées à l'aide d'un collier (300) à ouverture commandée, un actionneur (400) muni d'une tige (401) unique, et une cinématique monoaxe telle qu'un déplacement de la tige (401) sur une première portion de sa course ferme les deux vannes et sur le reste de sa course, ouvre le collier (300), l'actionneur comportant des moyens propres à assurer le déplacement de la tige (401) sur ces deux portions de course et agissant coaxialement ou sensiblement coaxialement, **caractérisé en ce que** ces moyens sont commandés indépendamment sur chacune desdites portions pendant une procédure de déconnexion d'urgence..

2. Système selon la revendication 1, **caractérisé en ce que** les moyens sont propres à assurer une réversibilité de l'opération de fermeture des vannes avant l'ouverture du collier.

3. Système selon la revendication 1 ou 2, **caractérisé en ce que** lesdits moyens comportent un vérin à double effet associé à un vérin assurant une course supplémentaire, lesdits vérins comportant chacun un piston et étant munis de trois orifices de commande pour commander le mouvement des pistons, et, partant, de la tige unique, qui est commune aux deux vérins, un orifice servant à la fermeture des vannes, un autre pour l'ouverture du collier, et le troisième pour rentrer entièrement la tige unique et rouvrir les vannes.

4. Système selon l'une des revendications 1 à 3, **caractérisé en ce que** l'actionneur est du genre comportant deux vérins imbriqués l'un dans l'autre, et commandant la tige d'actionneur unique, la course du premier vérin correspondant à ladite première portion de course de la tige et la course du deuxième vérin à la portion de course restante, chacun des vérins étant commandé par une électrovanne indépendante.

5. Système selon l'une quelconque des revendications précédentes, **caractérisé en ce que** le collier est du genre à deux secteurs reliés entre eux par des tirants dont l'un autorise l'ouverture dudit collier et l'autre permet le pivotement d'un secteur par rapport à l'autre, et **en ce que** ledit collier comporte des moyens élastiques intervenant entre les secteurs et les corps des vannes pour assurer l'ouverture complète du collier.

6. Système selon l'une quelconque des revendications précédentes, **caractérisé en ce que** la première portion de course correspondant à la commande de la fermeture des vannes est au moins égale à celle correspondant à l'ouverture du collier de manière à ce que, même lorsque la commande d'actionnement de la seconde portion de cours est déclenchée avant la commande de la première portion de course, les vannes seront fermées avant l'ouverture du collier de par la cinématique mono axe dudit système.

7. Système selon l'une quelconque des revendications 5 et 6, **caractérisé en ce que** les moyens élastiques se présentent sous la forme de rondelles élastiques disposées dans des puits prévus à cet effet sur les secteurs du collier, perpendiculairement à l'axe médian des deux corps de vannes.

8. Système selon l'une quelconque des revendications 4 à 7, **caractérisé en ce que** le premier vérin est alimenté par deux orifices, entre lesquels est monté un piston creux servant de cylindre à un second piston formant le second vérin et duquel part la tige d'actionneur, qui traverse lesdits premier et second vérins pour déboucher hors de l'actionneur.

9. Système selon la revendication 8, **caractérisé en ce que** ladite tige comporte une creusure traversante qui débouche derrière le second piston dans le second vérin pour alimenter ce dernier.

10. Système selon l'une des revendications 5 et 6 à 9, lorsque celles-ci dépendent de la revendication 5, **caractérisé en ce que** le tirant autorisant l'ouverture du collier est pourvu de cames à chacune de ses extrémités en liaison avec les extrémités correspondantes de chacun des secteurs l'une des cames étant conformée en index prenant appui sur l'extrémité du secteur correspondant, et **en ce que** ce tirant vient prendre appui dans la position fermée sur une butée ménagée à ladite extrémité dudit secteur du collier, celui-ci étant en outre sous contrainte des moyens élastiques qui l'équipent de sorte qu'un point mort doive être dépassé par l'index lors du pivotement du tirant sous l'action du vérin de l'actionneur pour ouvrir le collier.

11. Bras de chargement de fluide comportant un coupleur hydraulique et un système de déconnexion d'urgence tel que défini dans l'une quelconque des revendications précédentes et monté sur le bras en amont du coupleur hydraulique.

## Patentansprüche

1. Nottrennsystem (1), insbesondere für einen Fluidbeladungsarm, des Typs mit zwei mittels eines öffnungsgesteuerten Rings (300) aneinander liegenden Ventilen, einem mit einer einzigen Stange (401) versehenen Betätiger (400), und einer Einachskinematik, die so eingerichtet ist, dass eine Verschiebung der Stange (401) auf einem ersten Abschnitt ihres Laufes die zwei Ventile schließt und auf dem Rest ihres Laufes den Ring (300) öffnet, wobei der Betätiger Mittel zum Gewährleisten der Verschiebung der Stange (401) auf diesen zwei Laufabschnitten umfasst, die koaxial oder im Wesentlichen koaxial wirken, **dadurch gekennzeichnet, dass** diese Mittel während eines Nottrennvorgangs auf jedem dieser Abschnitte unabhängig gesteuert sind.

2. System nach Anspruch 1, **dadurch gekennzeichnet, dass** die Mittel zum Gewährleisten einer Umkehrbarkeit des Vorgangs des Schließens der Ventile vor dem Öffnen des Rings geeignet sind.

3. System nach Anspruch 1 oder 2, **dadurch gekennzeichnet, dass** die Mittel einen doppeltwirkenden Zylinder umfassen, der mit einem Zylinder assoziiert ist, der einen zusätzlichen Hub gewährleistet, wobei die Zylinder je einen Kolben umfassen und mit drei Steuerungsöffnungen zur Steuerung der Bewegung der Kolben und daher der einzigen Stange versehen sind, die den zwei Zylindern gemeinsam ist, wobei eine Öffnung zum Schließen der Ventile, eine andere zum Öffnen des Rings, und die dritte zum vollständigen Wiederaufnehmen der einzigen Stange und Wiederöffnen der Ventile jeweils dient.

4. System nach einem der Ansprüche 1 bis 3, **dadurch gekennzeichnet, dass** der Betätiger des Typs mit zwei ineinander verschachtelten Zylindern ist, die die einzige Stange des Betätigers steuern, wobei der Hub des ersten Zylinders dem ersten Laufabschnitt der Stange und der Hub des zweiten Zylinders dem übrigen Laufabschnitt jeweils entspricht, wobei jeder der Zylinder durch ein unabhängiges Magnetventil gesteuert ist.

5. System nach einem der vorherigen Ansprüche, **dadurch gekennzeichnet, dass** der Ring des Typs mit zwei miteinander über Zuganker verbundenen Abschnitten ist, wobei der eine die Öffnung des Rings ermöglicht und der andere das Schwenken eines Abschnitts in Bezug auf den anderen ermöglicht, und dadurch, dass der Ring zwischen den Abschnitten und den Ventilkörpern eingesetzte elastische Mittel zum Gewährleisten der vollständigen Öffnung des Rings umfasst.

6. System nach einem der vorherigen Ansprüche, **dadurch gekennzeichnet, dass** der erste Laufabschnitt, der der Steuerung der Schließung der Ventile entspricht, zumindest demjenigen gleich ist, der der Öffnung des Rings entspricht, so dass, selbst wenn die Steuerung der Betätigung des zweiten Laufabschnitts vor der Steuerung des ersten Laufabschnitts ausgelöst wird, die Ventile aufgrund der Einachskinematik des Systems vor der Öffnung des Rings geschlossen sein werden.

7. System nach einem der Ansprüche 5 und 6, **dadurch gekennzeichnet, dass** die elastischen Mittel in Form von elastischen Scheiben sind, die auf den Abschnitten des Rings in dafür vorgesehenen Schächten, senkrecht zur Mittelachse der zwei Ventilkörper, angeordnet sind.

8. System nach einem der vorherigen Ansprüche 4 bis 7, **dadurch gekennzeichnet, dass** der erste Zylinder über zwei Öffnungen gespeist wird, zwischen denen ein hohler Kolben montiert ist, der als Zylinder für einen zweiten Kolben dient, der den zweiten Zylinder bildet und von welchem sich die Stange des Betätigers erstreckt, die durch den ersten und zweiten Zylinder hindurchgeht, um aus dem Betätiger herauszuragen.

9. System nach Anspruch 8, **dadurch gekennzeichnet, dass** die Stange eine durchgehende Vertiefung umfasst, die hinter dem zweiten Kolben zum Speisen von diesem mündet.

10. System nach einem der Ansprüche 5 und 6 bis 9, wenn sich diese auf den Anspruch 5 beziehen, **dadurch gekennzeichnet, dass** der Zuganker, der die Öffnung des Rings gewährleistet, mit Nocken an jedem seiner Enden in Verbindung mit den entsprechenden Enden jedes der Abschnitte versehen ist, wobei eine der Nocken als Zeiger ausgebildet ist, der sich auf das Ende des entsprechenden Abschnitts abstützt, und dadurch, dass dieser Zuganker sich in der geschlossenen Position an einem Anschlag abstützt, der am Ende des Abschnitts des Rings vorgesehen ist, wobei dieser unter Beanspruchung der ihn ausstattenden elastischen Mittel liegt, so dass ein Totpunkt während des Schwenkens des Zugankers aufgrund der Wirkung des Zylinders des Betätigers vom Zeiger überschritten werden soll, um den Ring zu öffnen.

11. Fluidbeladungsarm, umfassend einen hydraulischen Koppler und ein Nottrennsystem nach einem der vorherigen Ansprüche, das auf dem Arm stromabwärts vom hydraulischen Koppler angeordnet ist.

## Claims

1. An emergency disconnection system (1), in particular for a fluid loading arm, of the kind having two valves which are coupled using a collar (300) with controlled opening, an actuator (400) provided with a single rod (401), and single axis kinematics such as a movement of the rod (401) over a first portion of its travel closes the two valves and over the remainder of its course, opens the collar (300), the actuator comprising means adapted to ensure the movement of the rod (401) over said two portions of travel and acting coaxially or substantially coaxially, **characterized in that**, during an emergency disconnection procedure, said means are independently controlled over each of said portions.

2. A system according to claim 1, **characterized in that** the means are adapted to ensure reversibility of the operation of closing the valves before the opening of the collar.

3. A system according to claim 1 or claim 2, **characterized in that** said means comprise a double acting jack associated with a jack giving a supplementary travel, said jacks each comprising a piston and being provided with three control apertures for controlling the movement of the pistons and, hence, of the single rod, which is common to both jacks, one aperture being used for closing the valves, another for opening the collar and the third for totally retracting the single rod and reopening the valves.

4. A system according to one of claims 1 to 3, **characterized in that** the actuator is of the kind comprising two jacks nested one inside the other, and controlling the single actuator rod, the travel of the first jack corresponding to said first portion of travel of the rod and the travel of the second jack to the remaining portion of travel, each of the jacks being controlled by an independent solenoid valve.

5. A system according to any one of the preceding claims, **characterized in that** the collar is of the kind with two segments connected together by tie rods of which one permits the opening of said collar and the other permits the pivoting of one segment with respect to the other, and **in that** said collar comprises elastic means operative between the segments and the bodies of the valves to ensure the full opening of the collar.

6. A system according to any one of the preceding claims, **characterized in that** the first portion of travel corresponding to the control for the closing of the valves is at least equal to that corresponding to the opening of the collar such that, even when the control for actuating the second portion of travel is set off before the control for the first portion of travel, the valves will be closed before the opening of the collar due to the single-axis kinematics of said system.

7. A system according to any one of claims 5 and 6, **characterized in that** the elastic means take the form of spring washers disposed in bores provided for that purpose in the segments of the collar, perpendicularly to the median axis of the two valve bodies.

8. A system according to any one of claims 4 to 7, **characterized in that** the first jack is supplied by two apertures, between which a hollow piston is mounted serving as a cylinder to a second piston forming the second jack and from which the actuator rod leaves, which passes through said first and second jacks to emerge from the actuator.

9. A system according to claim 8, **characterized in that** said rod comprises a hollow passing all the way through which issues behind the second piston in the second jack in order to supply the latter.

10. A system according to one of claims 5 and 6 to 9, when they are dependent on claim 5, **characterized in that** the tie rod permitting the opening of the collar is provided with cams at each of its ends linked with the corresponding ends of each of the segments, one of the cams being formed as an index finger bearing on the end of the corresponding segment, and **in that** in the closed position said tie rod comes to bear on a stop formed at said end of said segment of the collar, the latter being furthermore subject to stress by the elastic means with which it is equipped, such that a dead center must be passed by the index finger on pivoting of the tie rod under the action of the actuator jack to open the collar.

11. Fluid loading arm comprising a hydraulic coupler and an emergency disconnection system as defined in anyone of the preceding claims and mounted on the arm upstream of the hydraulic coupler.
